Europäisches Patentamt

European Patent Office

Office européen des brevets

(11) Veröffentlichungsnummer: **0 216 260 B1**

(12) **EUROPÄISCHE PATENTSCHRIFT**

(45) Veröffentlichungstag der Patentschrift: **24.11.93**

(21) Anmeldenummer: **86112558.1**

(22) Anmeldetag: **10.09.86**

(51) Int. Cl.5: **G11B 27/10**, G11B 27/36

(54) **Aufzeichnungs- und Wiedergabegerät mit einer Einrichtung zur Anzeige der Laufzeit der Restbandlänge.**

(30) Priorität: **14.09.85 DE 3532904**
**14.09.85 DE 3532906**

(43) Veröffentlichungstag der Anmeldung:
**01.04.87 Patentblatt 87/14**

(45) Bekanntmachung des Hinweises auf die
Patenterteilung:
**24.11.93 Patentblatt 93/47**

(84) Benannte Vertragsstaaten:
**AT BE CH DE FR GB IT LI NL**

(56) Entgegenhaltungen:
**WO-A-80/01522**
**DE-A- 2 918 544**
**DE-A- 3 318 324**
**DE-A- 3 412 735**
**DE-C- 3 049 296**

(73) Patentinhaber: **Nokia (Deutschland) GmbH**
**Östliche Karl-Friedrich-Strasse 132**
**D-75175 Pforzheim(DE)**

(72) Erfinder: **Apitz, Siegfried**
**L. Windthorststrasse 24**
**D-7530 Pforzheim(DE)**
Erfinder: **Schlegel, Werner**
**Rudolfstrasse 21**
**D-7530 Pforzheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

**Beschreibung**

Die Erfindung betrifft ein Aufzeichnungs- und Wiedergabegerät mit einer Einrichtung zur Anzeige der Laufzeit der Restbandlänge, nämlich eine Meßeinrichtung zur Messung des augenblicklichen Bandvorrates der Bandwickel und eine Recheneinrichtung zur Berechnung und Anzeige der Laufzeit der Restbandlänge des bandförmigen Informationsträgers nach einem vorgegebenen Rechenprogramm aus den gemessenen Bandvorratsdaten und den dem Typ der Kassette eigenen Nenndaten der Abmessungen des bandförmigen Informationsträgers.

Beispielsweise für die Benutzer von Videorecordern wird es immer interessanter, die noch zur Verfügung stehende Laufzeit des Videobandes einer in den Videorecorder eingelegten Bandkassette zu kennen, um feststellen zu können, ob eine noch in der Kassette zur Verfügung stehende Bandlänge ausreicht, eine in den Videorecorder vorprogrammierte Sendung aufzunehmen. Reicht der Bandvorrat der in das Videogerät eingelegten Kassette nicht für die gesamte Dauer einer aufzunehmenden Sendung aus, geht für den Benutzer des Videorecorders ein Teil der Sendung oft unwiederbringlich verloren, so daß für ihn unter Umständen die nur teilweise aufgenommene Sendung nutzlos ist.

In derartigen Aufzeichnungs- und Wiedergabegeräten ist deshalb immer häufiger eine Einrichtung zur Anzeige der Laufzeit der augenblicklichen Restbandlänge der in das Gerät eingelegten Bandkassette angeordnet, die noch für eine Aufzeichnung zur Verfügung steht. Eine derartige Einrichtung ist beispielsweise aus der DE-A- 33 18 324 bekannt. Mit dieser Einrichtung wird die Umdrehungszeit der beiden Bandwickel der Bandkassette bei einer bestimmten Transportgeschwindigkeit des Bandes gemessen und in einer Recheneinheit die Summe der gemessenen Umdrehungszeiten oder Anzahl von Umdrehungen gebildet und mit einem vorbestimmten Schwellwert verglichen. Der Schwellwert gibt Auskunft, ob eine Bandkassette mit großem oder mit kleinem Durchmesser des Wickelkernes vorliegt. Wie weiter der Druckschrift entnommen werden kann, wird mit der Summe der gemessenen Umdrehungszeiten auch der Kassettentyp der in das Gerät eingelegten Kassette ermittelt. Aus den von dieser Einrichtung zur Bestimmung des Bandkassettentypes erhaltenen und ausgegebenen Nenndaten des Bandkassettentypes und der gemessenen Umdrehungszeit der Abwickelrolle wird die restliche Bandlänge auf der Abwickelrolle in einer Recheneinrichtung berechnet und in Zeiteinheiten als restliche Aufnahmezeit angezeigt. Die kleinsten Zeiteinheiten sind dabei Zehnminutenschritte.

In die Berechnung dieser restlichen Aufnahmezeit geht direkt die Banddicke des bandförmigen Informationsträgers ein. Diese Banddicke kann jedoch um 10% oder mehr von der Nennbanddicke des bandförmigen Informationsträgers abweichen, so daß auch die in der Recheneinrichtung berechnete Restbandlänge einer dementsprechenden Unsicherheit des Längenwertes unterliegt. Das heißt jedoch, daß beispielsweise bei einem Kassettentyp mit einer Nennspiellänge von 180 Minuten eine Unsicherheit in der Restzeitangabe von wenigstens 20 Minuten besteht.

Der Erfindung liegt die Aufgabe zugrunde, die Unsicherheit der Anzeige der noch zur Verfügung stehenden Restaufzeichnungszeit einer Bandkassette wesentlich zu verringern.

Diese Aufgabe wird nach der Erfindung für ein im Oberbegriff des Anspruches 1 angegebenes Aufzeichnungs- und Wiedergabegerät durch die im kennzeichnenden Teil dieses Anspruches angegebenen Maßnahmen gelöst.

Die Erfindung geht dabei davon aus, daß die Bandlänge des bandförmigen Informationsträgers in einer Bandkassette eines bestimmten Kassettentypes nur wenig von der Nennbandlänge dieses Kassettentypes abweicht und demzufolge eine weit geringere Schwankungsbreite aufweist als die Banddicke des bandförmigen Informationsträgers bezüglich dessen Nennbanddicke. Durch die zwei zusätzlichen Rechengänge wird die Berechnung der Restbandlaufzeit nicht mehr auf die Nennbanddicke, sondern auf die Nennbandlänge des Kassettentypes der fraglichen Bandkassette bezogen. Dadurch wird die Unsicherheit der Angabe der Restbandlaufzeit in den Minutenbereich verlegt, so daß die gesamte für die Bandkassette angegebene Nennzeit für Aufzeichnungen ausgenutzt werden kann, insbesondere da die Bandkassetten im allgemeinen einen bestimmten Überschuß an Bandlänge aufweisen.

Die Unteransprüche kennzeichnen vorteilhafte Ausgestaltungen und Weiterbildungen der Erfindung.

Eine dieser vorteilhaften Ausgestaltungen ist durch eine Einrichtung zur Erkennung des Types der in das Gerät eingelegten Kassette und zur Ausgabe der Nennwerte der Abmessungen des in der Kassette enthaltenen bandförmigen Informationsträgers gekennzeichnet. Eine weitere vorteilhafte Ausgestaltung der Erfindung besteht darin, daß diese Meßeinrichtung zur Messung des Umfanges der Bandwickel vorgesehen ist.

Bei der aus der genannten Druckschrift DE-A- 33 18 324 bekannten Einrichtung wird mit der Summe der gemessenen Umdrehungszeiten der Kassettentyp der in das Gerät eingelegten Kassette ermittelt. Da jedoch die Summe der gemessenen Umdrehungszeiten der beiden Bandwickel in der Bandkassette nicht

2

nur von den Abweichungen der Nenndicke des Bandes und der hinzukommenden Wickelluft abhängt, sondern in hohem Maße auch von der prozentualen Länge des aufgewickelten oder abgewickelten Bandanteiles der gesamten Wickellänge, besteht für die Erkennung eines Kassettentyps ein so erheblicher Ermittlungsspielraum, der nur eine geringe Anzahl zu erkennender, in der Spieldauer weit auseinanderliegender Kassettentypen zuläßt. Es ist deshalb von besonderem Vorteil, eine Einrichtung zur Feststellung des Bandkassettentypes in einem Bandaufzeichnungs- und Wiedergabegerät der eingangs angegebenen Art vorzusehen und das Gerät so auszugestalten, daß das Rechenprogramm der Recheneinrichtung einen Rechengang zur Bildung der Summe des Quadrates des von der Meßeinrichtung ermittelten augenblicklichen Umfanges der beiden Bandwickel und zum Vergleich dieser Summe mit den die Kassettentypen kennzeichnenden Vergleichswerten, die in der Einrichtung zur Erkennung des Kassettentyps gespeichert sind, enthält. Auf diese Weise wird der Ermittlungsspielraum für die sichere Erkennung bestimmter Bandkassettentypen wesentlich verkleinert.

Eine derartige Ausgestaltung eines Bandaufzeichnungs- und Wiedergabegerätes ist aus der Druckschrift DE-A-2918544 bekannt. Das in der Druckschrift offenbarte VCR-Gerät enthält eine Recheneinrichtung, die aus der an den Bandabwickeltellern abgetasteten Tachometerimpulsen die Umlaufperioden der Bandwickelteller bestimmt und aus der Summe der Quadrate dieser Umlaufperioden durch einen Vergleich den Kassettentyp der verwendeten Kassette mit den der Kassette zugeordneten geometrischen Daten des Bandes und der Kassette ermittelt. Die Recheneinrichtung führt dann mit diesen Daten in einer festgelegten Rechenoperation die Berechnung der verbleibenden Restlaufzeit für das Band der verwendeten Kassette in dem Gerät aus, um diese Restlaufzeit und den Kassettentyp auf einer Anzeigevorrichtung anzuzeigen.

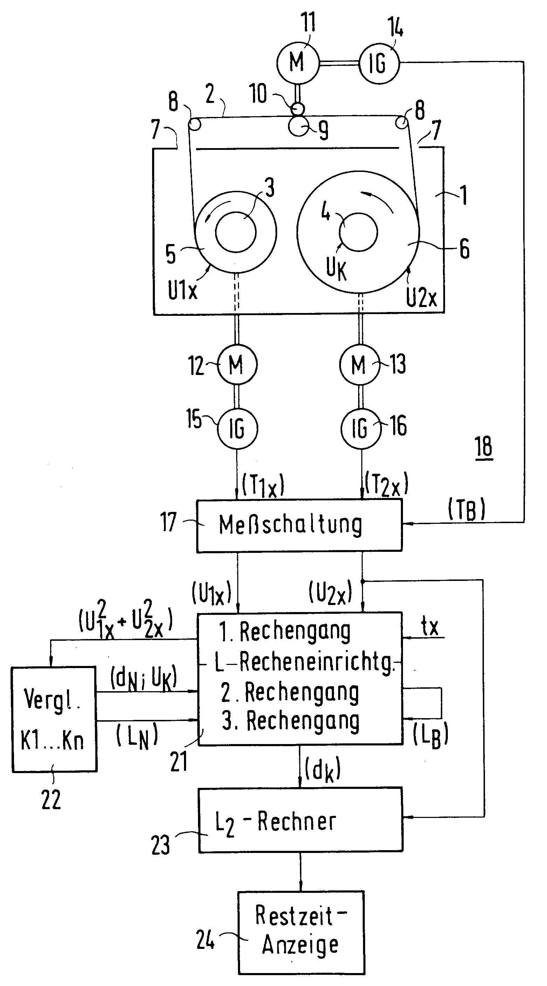

Der mit diesen Maßnahmen verbundene Vorteil beruht darauf, daß nur noch die Abweichungen der Abmessungen des Bandes und des Wickelkernes der Bandkassetten in den Erkennungsspielraum für die Erkennung der Bandkassette eingehen, nicht jedoch die Verteilung des Wickelvorrates auf die beiden Bandwickel. Außerdem beruht die Messung des Wickelumfanges auf einer verhältnismäßig einfachen Messung, bei der nur eine Geschwindigkeit genau gemessen werden muß. Es kann deshalb mit verhältnismäßig einfachen und wenigen Meßanordnungen ausgekommen werden, was die Herstellung eines derartigen Gerätes wesentlich vereinfacht. Die Erfindung wird nachfolgend anhand eines in der Zeichnung schematisch als Blockschaltbild dargestellten vorteilhaften Ausführungsbeispieles näher erläutert.

In der Zeichnung ist schematisch eine in ein Aufzeichnungs- oder Wiedergabegerät eingelegte Bandkassette 1 mit einem bandförmigen Aufzeichnungsträger 2 dargestellt. Der bandförmige Aufzeichnungsträger ist auf zwei Wickelkerne 3 und 4 zu je einem Bandwickel 5 und 6 aufgewickelt und ist durch Öffnungen 7 aus der Bandkassette 1 herausgeführt und außerhalb der Bandkassette von Führungsrollen 8 geführt. Außerhalb der Bandkassette 1 ist der bandförmige Aufzeichnungsträger von einer Andruckrolle 9 gegen eine Bandtransportrolle 10 gepreßt. Die Bandtransportrolle 10 wird von einem geregelten Capstanmotor 11 angetrieben und transportiert den bandförmigen Informationsträger mit einer vorgegebenen Bandgeschwindigkeit von dem abwickelnden Bandwickel 6 zu dem aufwickelnden Bandwickel 5. In dem dargestellten Ausführungsbeispiel wird der aufwickelnde Bandwickel von einem Motor 12 angetrieben und der abwickelnde Bandwickel 6 von einem Motor 13 gebremst. Mit der Bandantriebsrolle 10 ist ein Impulsgeber 14 gekoppelt und mit den Bandwickeln 5 und 6 ist je ein Impulsgeber 15 und 16 gekoppelt. Die Ausgänge der Impulsgeber sind an Eingänge einer Meßschaltung 17 angeschlossen, die zusammen mit den Impulsgebern 14, 15 und 16 eine Meßeinrichtung 18 zur Messung des augenblicklichen Umfanges $U_{1x}$ des Bandwickels 5 und $U_{2x}$ des Bandwikkels 6 bilden. Die den Bandwickeln 5 und 6 zugehörigen Impulsgeber 15 und 16 erzeugen wenigstens bei jeder Umdrehung des Bandwickels einen Ausgangsimpuls $T_{1x}$ und $T_{2x}$, während der mit der Bandtransportrolle 10 gekoppelte Impulsgeber 14 nach jeweils einer kleinen, vorbestimmten Transportstrecke des bandförmigen Informationsträgers 2 einen Impuls $T_B$ erzeugt. Die Transportstrecken sind so bemessen, daß der Impulsgeber 14 für jede Umdrehung der Bandwickel 5 und 6 mehrerehundert Impulse $T_B$ erzeugt.

Die Meßeinrichtung 18 liefert an ihrem einen Ausgang 19 einen den augenblicklichen Umfang $U_{1x}$ des aufwickelnden Bandwickels 5 darstellenden Meßwert während ein zweiter Ausgang 20 der Meßeinrichtung 18 einen dem augenblicklichen Umfang $U_{2x}$ des abwickelnden Bandwickels 6 angebenden Meßwert ausgibt. Beide Meßwerte gelangen entsprechend dem dargestellten Ausführungsbeispiel zu einer ersten Recheneinrichtung 21, die nach einem Auslösesignal $t_x$ in einem ersten Rechengang die Summe des Quadrates des augenblicklichen Umfanges $U_{1x}$ und $U_{2x}$ der beiden Bandwickel 5 und 6 bildet und einem Vergleicher 22 zur Bestimmung des Kassettentyps zuleitet.

Der Ausgangswert des ersten Rechenganges der Recheneinrichtung 21 kennzeichnet unmittelbar den Typ einer in ein Aufzeichnungs- oder Wiedergabegerät eingelegten Kassette 1 wie folgende Überlegung zeigt:

Die gesamte Bandlänge des in der Kassette 1 befindlichen Bandes 2 beträgt $L_{B1}$ und die Dicke des Bandes

EP 0 216 260 B1

$d_1$. Zum Zeitpunkt x wird für den Umfang des Bandwickels 6 der Wert $U_{1x}$ gemessen und für den Umfang des Bandwickels 5 der Wert $U_{2x}$. Auf dem Bandwickel 6 befindet sich zum Wickelzeitpunkt x die Bandlänge

$$L_{1x} = w_{1x} \times 1/2 (U_{1x} + U_K)$$

worin $w_{1x}$ die augenblickliche Windungszahl des Bandwickels 6 und $U_K$ der Umfang der Wickelkerne der Bandkassette 1 ist. Durch den Ersatz von $w_{1x}$ aus den Daten der Wickelfläche wird

$$L_{1x} = \frac{U_{1x}^2 - U_K^2}{4 \pi d_1}$$

Für die Bandlänge $L_{2x}$ des Bandwickels 5 gilt entsprechendes. Die Summe der augenblicklichen Bandlänge $L_{1x} + L_{2x}$ auf den beiden Bandwickeln 5 und 6 ist immer die gesamte Bandlänge $L_{B1}$ des Bandkassententypes $K_1$:

$$L_{B1} = \frac{U_{1x}^2 + U_{2x}^2 - 2 U_K^2}{4 \pi d_1}$$

Daraus folgt, daß die Summe des Quadrates des Umfanges der beiden Bandwickel 5 und 6

$$U_{1x}^2 + U_{2x}^2 = 4 \pi d_1 L_{B1} + 2 U_K^2$$

zu jedem Wickelzeitpunkt x nur noch von den Abmessungen des Bandes 6 ($L_{B1}$, $d_1$) und der Wickelkerne 5 und 6 ($U_K$) bestimmt ist und der Erkennungsspielraum nur noch von den Abweichungen dieser Abmessungen von dem Nennwert für den Kassettentyp beeinflußt wird.

Für den erkannten Kassettentyp liefert der Vergleicher 22 die Nennbanddicke $d_N$ des bandförmigen Informationsträgers 2 und Nenndaten der Wickelkerne 3 und 4, beispielsweise den Kernumfang $U_K$ der Wickelkerne des erkannten Kassettentypes der in das Aufzeichnungsgerät eingelegten Bandkassette 1 an die Recheneinrichtung 21. Aus diesen Daten und aus den Ausgabedaten des ersten Rechenganges ermittelt die Recheneinrichtung 21 in einem zweiten Rechengang eine Bandlänge

$$L_B = \frac{U_{1x}^2 + U_{2x}^2 - U_K^2}{4 \pi d_N} \qquad (1)$$

des in der Bandkassette 1 befindlichen bandförmigen Informationsträgers 2. In einem dritten Rechengang verändert die Recheneinrichtung den Wert der Nennbanddicke $d_N$ in einen derartigen korrigierten Wert $d_k$ der Banddicke des bandförmigen Informationsträgers, daß der Wert der Bandlänge den Wert der von dem Vergleicher 22 gelieferten Nennbandlänge $L_N$ des ermittelten Kassettentypes annimmt. Bei diesem Rechengang wird davon ausgegangen, daß die Bandlänge des bandförmigen Informationsträgers der in das Aufzeichnungsgerät eingelegten Kassette mit höchstens geringen Abweichungen die Nennbandlänge $L_N$ des ermittelten Kassettentypes ist und die berechnete abweichende Länge $L_B$ des bandförmigen Informationsträgers von der Banddicke des bandförmigen Informationsträgers bzw. dem mittleren Abstand zweier benachbarter Windungen dieses Informationsträgers auf dem Bandwickel herrührt. Die so aus

4

$$L_N = \frac{U^2_{1x} + U^2_{2x} - U^2_K}{4 \pi \, d_K} \qquad (2)$$

ermittelte korrigierte Banddicke $d_k$ wird einer Restzeitrecheneinrichtung 23 zugeführt, die aus dem augenblicklich gemessenen Umfang $U_{2x}$, aus der korrigierten Banddicke $d_k$ und dem Umfang der Wickelkerne $U_K$ die Restbandlänge

$$L_2 = \frac{U^2_{2x} - U^2_K}{4 \pi \, d_k} \qquad (3)$$

ermittelt und nach Division mit der Transportgeschwindigkeit des bandförmigen Informationsträgers die Laufzeit für die Restbandlänge $L_2$ ermittelt und an eine Restzeitanzeige 24 des Aufzeichnungsgerätes zur Anzeige dieser Zeit ausgibt. Diese Zeitangabe ist nur noch mit der Zeitunsicherheit behaftet, die der möglichen Längenabweichung der Bandlänge des in der Bandkassette enthaltenen bandförmigen Informationsträgers 2 von der Nennbandlänge des Kassettentypes abweicht.

Die Ermittlung der korrigierten Banddicke $d_k$ kann vor jeder Ermittlung der Laufzeit der Restbandlänge $L_2$ durchgeführt werden. Dadurch wird eine weitere hohe Genauigkeit der Anzeige dieser Zeit erreicht.

**Patentansprüche**

1. Gerät zur Aufzeichnung einer Information auf einen bandförmigen, in einer Kassette (1) auf Bandwikkeln (4,5) angeordneten Informationsträger (2) oder zur Wiedergabe einer Information von diesem Informationsträger
   - mit einer Meßeinrichtung (18) zur Messung des augenblicklichen Bandvorrates der Bandwickel
   - und mit einer Recheneinrichtung (23) zur Berechnung und Anzeige der Laufzeit der Restbandlänge ($L_2$) des bandförmigen Informationsträgers nach einem die Restlaufzeit ermittelnden Rechengang eines vorgegebenen Rechenprogrammes aus den von der Meßeinrichtung ermittelten Bandvorratsdaten ($U_{x1}$, $U_{x2}$) und den dem Typ der Kassette eigenen Nenndaten der Abmessungen des bandförmigen Informationsträgers (Nennbandlänge $L_N$, Nennbanddicke $d_N$) und der Kassette (Wickelkernumfang $U_K$),
   **dadurch gekennzeichnet**,
   - daß das Rechnenprogramm der Recheneinrichtung (21, 23) einen ersten zusätzlichen Rechengang zur Ermittlung der Gesamtlänge ($L_B$) des bandförmigen Informationsträgers (2) aus der Nennbanddicke ($d_N$) und aus den von der Meßeinrichtung (18) ausgegebenen Daten ($U_{1x}$, $U_{2x}$) für den augenblicklichen Bandvorrat der beiden Bandwickel (5,6),
   - und einen zweiten zusätzlichen Rechengang zur Ermittlung einer der Recheneinrichtung (23) anstelle der Kennbanddicke ($d_N$) zugeführten korrigierten Banddicke ($d_K$) enthält, die bei einer Berechnung nach dem ersten zusätzlichen Rechengang eine Gesamtbandlänge des bandförmigen Informationsträgers ergibt, die gleich der Nennbandlänge ($L_N$) des Kassettentyps ist.

2. Gerät nach Anspruch 1, gekennzeichnet durch eine Einrichtung (22) zur Erkennung des Types der in das Gerät eingelegten Kassette (1) und zur Ausgabe der Nennwerte der Abmessungen ($L_N$, $d_N$) des in der Kassette enthaltenen bandförmigen Informationsträgers (2) und der Kassette (Wickelumfang $U_K$).

3. Gerät nach Anspruch 1, dadurch gekennzeichnet, daß die Maßeinrichtung (18) zur Messung des Umfanges ($U_{1x}$, $U_{2x}$) der Bandwickel (5, 6) vorgesehen ist.

4. Gerät nach Anspruch 3, dadurch gekennzeichnet, daß das Rechenprogramm der Recheneinrichtung (21) einen Rechengang zur Bildung der Summe des Quadrates der von der Meßeinrichtung (18) ermittelten augenblicklichen Umfänge ($U_{1x}$, $U_{2x}$) der beiden Bandwickel (5, 6) und zum Vergleich dieser Summe mit den die Kassettentypen kennzeichnenden Vergleichswerten ($V_{Kn}$), die in der Einrichtung (22) zur Erkennung des Kassettentyps gespeichert sind, enthält.

**Claims**

**1.** Device for recording information on a tapelike information medium (2) arranged in a cassette (l) on tape spools (4,5), or for playing back information from said information medium,

- with a measurement apparatus (18) for measuring the instantaneous tape reserve on the tape spools;
- and with a calculation apparatus (23) for calculating and displaying the playing time of the remaining tape length (L$_2$) of the tapelike information medium on the basis of a calculation run which determines the remaining playing time of a predefined calculation program from the remaining tape data (U$_{x1}$, U$_{x2}$) determined by the measurement apparatus and from the nominal data, peculiar to the type of cassette, for the dimensions of the tapelike information medium (nominal tape length L$_N$, nominal tape thickness d$_N$) and of the cassette (spool core circumference U$_K$),

**characterized in that**

- the calculation program of the calculation apparatus (21, 23) contains a first additional calculation run to determine the total length (L$_B$) of the tapelike information medium (2) from the nominal tape thickness (d$_N$) and from the data (U$_{1x}$, U$_{2x}$) output by the measurement apparatus (18) for the instantaneous tape supply on the two tape spools (5, 6),
- and a second additional calculation run to determine a corrected tape thickness (d$_K$) which is conveyed to the calculation apparatus (23) instead of the nominal tape thickness (d$_N$) and which, in a calculation on the basis of the first additional calculation run, yields a total tape length for the tapelike information medium that is equal to the nominal tape length (L$_N$) of the cassette type.

**2.** Device according to claim 1, characterized by an apparatus (22) to detect the type of cassette (1) inserted into the device, and to output the nominal values of the dimensions (L$_N$, d$_N$) of the tapelike information medium (2) contained in the cassette, and of the cassette (spool circumference U$_K$).

**3.** Device according to Claim 1, characterized in that the measurement apparatus (18) is provided in order to measure the circumference (U$_{1x}$, U$_{2x}$) of the tape spool (5, 6).

**4.** Device according to Claim 3, characterized in that the calculation program of the calculation apparatus (21) comprises a calculation run to form the sum of the squares of the instantaneous circumferences (U$_{1x}$' U$_{2x}$) of the two tape spools (5, 6) as determined by the measurement apparatus (18), and to compare this sum with the comparison values (V$_{Kn}$) characterizing the cassette types, which are stored in the apparatus (22) for detecting the cassette type.

**Revendications**

**1.** Appareil pour l'enregistrement d'une information sur un support d'information (2) disposé sur des enroulements en bande (4, 5) dans une cassette (1) ou pour la reproduction d'une information à partir de ce support
- avec un dispositif de mesure (18) pour la mesure de la réserve actuelle d'enroulements en bande
- et avec un dispositif de calcul (23) pour le calcul et l'affichage de la durée de marche de la longueur de bande restante (L$_2$) du support d'information en forme de bande selon une opération de calcul d'un programme de calcul donné, décelant la durée de marche restante à partir des données de réserve de bande (U$_{x1}$, U$_{x2}$) décelées par le dispositif de mesure et des données nominales spécifiques au type de la cassette des dimensions du support d'informations en forme de bande (longueur nominale de bande L$_N$, épaisseur nominale de bande d$_N$ et de la cassette (circonférence de l'axe d'enroulement U$_K$),

**caractérisé en ce que**
- le programme de calcul du dispositif de calcul (21, 23) contient une première opération de calcul additionnelle pour la détection de la longueur totale (L$_B$) du support d'information en forme de bande (2) à partir de l'épaisseur nominale de la bande (d$_N$) et des données (U$_{1x}$, U$_{2x}$) émises par le dispositif de mesure (18) pour la réserve de bande actuelle des deux enroulements (5,6),
- et une deuxième opération de calcul additionnelle pour la détection d'une épaisseur de bande (d$_K$) transmise au dispositif de calcul (23) à la place de l'épaisseur nominale de bande (d$_N$), fournissant lors d'un calcul selon la première opération de calcul additionnelle une longueur de bande totale du support d'informations en forme de bande qui est égale à la longueur de bande nominale ($L_N$) du type de cassette.

2. Appareil selon la revendication 1, caractérisé par un dispositif (22) pour la détection du type de la cassette (1) logée dans l'appareil et pour l'émission des valeurs nominales des dimensions ($L_N$, $d_N$) du support d'informations en forme de bande (2) contenu dans la cassette (circonférence de l'axe d'enroulement $U_K$).

3. Appareil selon la revendication 1, caractérisé en ce que le dispositif de mesure (18) est prévu pour la mesure de la circonférence ($U_{1x}$, $U_{2x}$) des enroulements en bande (5,6).

4. Appareil selon la revendication 3, caractérisé en ce que le programme de calcul du dispositif de calcul (21) contient une opération de calcul pour la sommation du carré des circonférences actuelles ($U_{1x}$, $U_{2x}$) des deux enroulements (5,6) décelées par le dispositif de mesure (18) et pour la comparaison de cette somme avec les valeurs de comparaison ($V_{Kn}$) caractérisant les types de cassette et mémorisées dans le dispositif (22) pour l'identification du type de cassette.